# EUROPEAN PATENT APPLICATION

(11) **EP 2 960 000 A1**
(43) Date of publication of application: **30.12.2015**
(21) Application number: 14753883.9
(22) Date of filing: 11.02.2014
(51) Int. Cl.: B23K 9/095, B23K 9/12

(54) **BUTT JOINT WELDING APPARATUS AND METHOD THEREFOR**

(30) Priority: 25.02.2013 KR 20130019625
(71) Applicant: Daewoo Shipbuilding & Marine Engineering Co., Ltd., Seoul 100-180 (KR)
(72) Inventor: KIM, Young Joo, Geoje-si Gyeongsangnam-do 656-130 (KR)
(74) Representative: Ipside
(86) International application number: PCT/KR2014/001121
(87) International publication number: WO 2014/129766

(57) **Abstract**

The present invention relates to a butt joint welding apparatus and a method therefor, and the apparatus includes: a traverse device part for conveying a welding tip vertically or slantingly to the bevel of an upper parent metal and a lower parent metal; a welding torch with a welding tip mounted in the traverse device part; a copper shoe device mounted in the traverse device part so as to be positioned in the direction of welding by the welding tip for ejecting a gas to the molten metal in the direction reverse to the welding direction; a control unit for controlling the welding condition according to the positions of the bevels of the butt joint welding, wherein the control unit enables the traverse device part to be conveyed along a particular weaving pattern including the weaving traverse including a plurality of nodal points and the slanting traverse, and controls the welding current and voltage, the wire supply speed, the traverse speed, and the stopping time in the nodal point in the moving interval between adjacent nodal points.

## Description

### [Technical Field]

The present invention relates to a horizontal butt joint welding, and more particularly, to an apparatus and a method for deposited welding a horizontal butt joint which can weld a joint by deposited welding including welding of a root part.

### [Background Art]

In general, a butt joint welding is to connect parent metals facing each other by welding, and is frequently used when iron plates are connected.

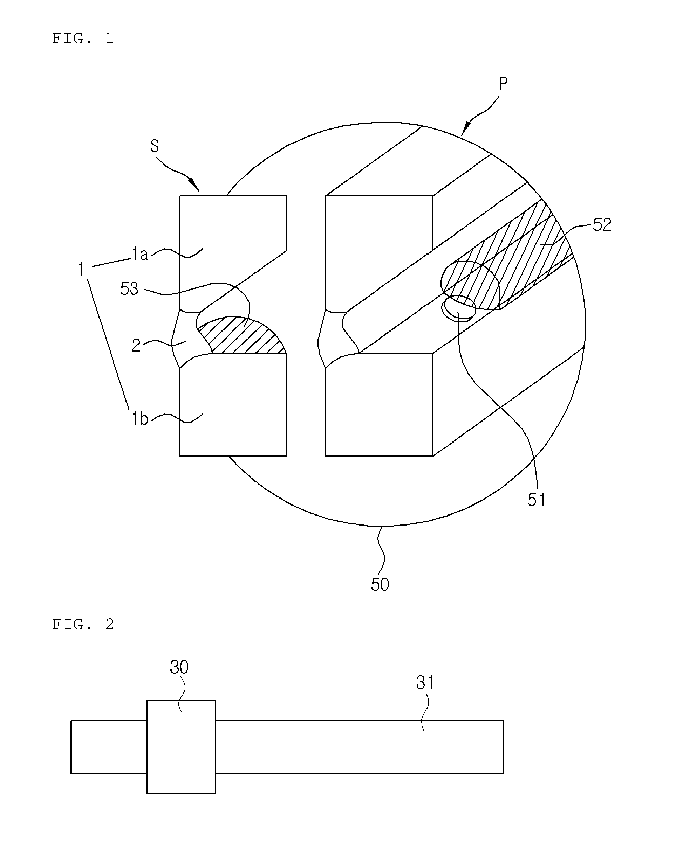

FIG. 1 is a view showing a welded state after root pass at the time of a conventional automatic welding.

In FIG. 1, the part S is a sectional view and the part P is a partially cutaway perspective view. Hereinafter, in the specification and drawings of the present invention, the part S indicates a sectional view and the part P indicates a partially cutaway perspective view.

As shown in FIG. 1, in case that two parent metals 1a and 1b facing each other lengthwise are butt-welded horizontally, the upper parent metal 1a and the lower parent metal 1b face each other and a welded joint becomes a bevel. Moreover, the bevel of the upper parent metal 1a is inclined upward, and the lower parent metal 1b is welded in a beveled state at right angles from the plane.

As described above, in case of applying flux cored arc welding using an automatic machine in relation with the horizontal butt joint, as shown in FIG. 1, the upper parent metal 1a and the lower parent metal 1b are arranged to have different gaps 3 according to a rate of production, and a root part 2 is formed when the gaps 3 are filled and root pass is first carried out on the back of a side where welding is carried out. In case that deposited welding is carried out inside the bevel on which the root part 2 is formed, molten metal precedes a welding arc due to low viscosity of the molten metal and gravity acting to the molten metal so that the arc is formed on the molten metal. Because the arc formed on the molten metal is difficult to make the parent metal sufficiently penetrate, it frequently causes defects, such as incomplete fusion and slag inclusion in the welded metal.

Moreover, in case of a low arc force, the upper parent metal forms an unwelded macro cross-section 53 (See FIG. 1).

The arc force means a power to push a molten pool, and generally, increases proportionally to the square of current and the double of voltage. In case that the arc force is weak, that is, in case that low current and low voltage are used, because arc radius 51 becomes smaller, molten metal 52 is formed small. Furthermore, a thin metal penetration is formed on the bottom surface of the parent metal because the force to push the small molten metal 52 also becomes smaller, and only the lower parent metal 1b is welded on the cross section of the welded joint because the molten metal is not pushed up to the bevel of the upper parent metal 1a, so that the upper parent metal 1a is welded while forming an unwelded macro cross section 53.

Additionally, because a welding tip 31 of a general welding torch 30 is about 8mm, in case that it carries out weaving at a small ad narrow space, the welding tip gets in contact with the bevel and it frequently causes short. FIG. 2 is a view showing a conventional welding tip 30.

In order to precisely weld the inside of the bevel, five to seven passes are needed. In addition, after welding the inside of the bevel, in case that welding of the surface part is carried out, because welding bead deflection frequently occurs due to influences of the low viscosity of the molten metal and gravity acting to the molten metal, the top bead has four or five passes to precisely weld if possible.

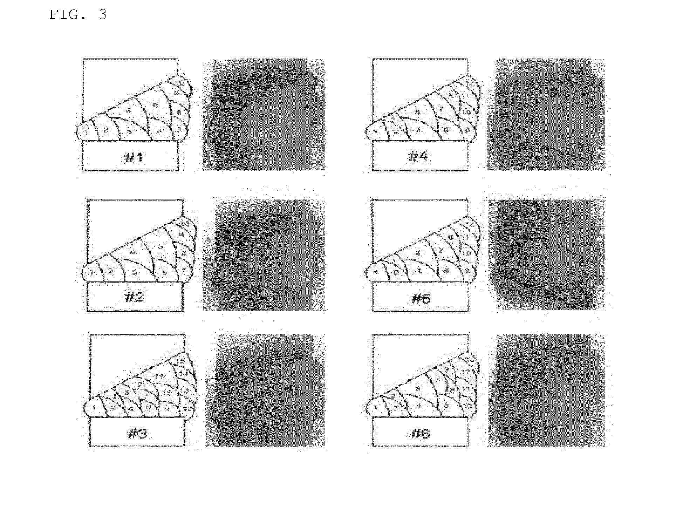

FIG. 3 is a sectional view of welded parts #1 to #6 that parent metals with a thickness of 23mm are welded using a number of passes by the conventional welding apparatus.

In case of the conventional welding method, a parent metal with a thickness of 15mm requires eight passes, and a parent metal with a thickness of 23mm requires 10 to 15 passes as shown in FIG. 3. Therefore, when the parent metal with a thickness of 23mm is welded by the conventional welding apparatus, the macro cross section 53 (areas of reference numbers 1, 3, 5, 8 and 9 of the welded cross section in FIG. 3), which has the unwelded side of the upper parent metal, is formed, and hence, the plural passes must be welded.

In other words, in the conventional welding apparatus, the root part 2 is formed by carrying out root pass to the gaps 3 determined by the thickness of the parent metal and deposited welding of the inside of the bevel is carried out after the root part 2 is formed. However, even in case that deposited welding is carried out according to the thickness of the parent metal, like the cross sections of the welded parts #1 to #6 shown in the drawing, the multi-layered passes (10 to 15 passes) must be welded by the small deposit amount, and hence, there is a limitation in improving productivity through reduction of the number of the passes.

### [Disclosure]

### [Technical Problem]

Accordingly, the present invention has been made in an effort to solve the above-mentioned problems occurring in the prior arts, and it is an object of the present invention to provide automatic welding of a horizontal butt joint, and more particularly, an apparatus and a method for deposited welding a horizontal butt joint which can form a deposited welded part while forming a root part when deposited welding is carried out onto a bevel, thereby achieving deposited welding without any defect of the inside and surface of a welded cross section and reducing the number of welding passes.

It is another object of the present invention to provide an apparatus and a method for deposited welding a horizontal butt joint which can prevent bead deflection in the direction of the surface of a groove and precedence of molten metal in the tangential direction during deposited weaving welding.

### [Technical Solution]

To achieve the above objects, the present invention provides a horizontal butt joint deposited welding apparatus including: a traveling device part for conveying a welding tip vertically or slantingly to bevels of an upper parent metal and a lower parent metal; a welding torch which has a welding tip and is mounted in the traveling device part; a copper shoe device which is mounted in the traveling device part and is located in the welding direction by the welding tip in order to inject a gas to molten metal in the reverse direction to the welding direction; and a control unit for controlling welding conditions according to positions of the bevels in order to maintain a fixed deposition amount on the upper parent metal not to form a macro cross section on which a welded side is not formed, wherein the control unit enables the traveling device part to be conveyed along a particular weaving pattern including weaving traveling having a plurality of nodal points and diagonal traveling and controls welding current and voltage, wire supply speed, traveling speed, and stopping time at the nodal points in moving intervals between the nodal points to carry out deposited welding of the bevels.

The welding current and voltage respectively have initial values according to the length of a gap (G) between the upper parent metal and the lower parent metal, and is varied in size at the two nodal points, which form a rear bead (B), to increase in proportion to the vertical width of the cross section of the bevel at the nodal point which forms a surface bead (F).

In case that the stopping time for preheating at the two nodal points to form the rear bead (B) and producing an indefective bead is T1, the stopping time at each of the two nodal points for forming the rear bead (B) which carries out welding of the inside of the bevel and the stopping time of the nodal point for forming the surface bead (F) are 0.2*T1 within an error range of about ±10%. The stopping time at the nodal point for forming the surface bead (F) is 0.8*T1 within an error range of about ±10%.

The wire supply speed is calculated to set an initial value at the nodal points for forming the rear bead (B) by the gap (G) and is calculated to increase more than the initial value at the nodal points located between the nodal points for forming the rear bead (B) and the surface bead (F) in proportion to the vertical width of the cross section of the bevel.

The copper shoe device includes: a rear gas injection part; a front gas injection part; and a gas passage of a groove form which is formed on the opposite side of a side where the rear gas injection part and the front gas injection part are formed so as to get shallower toward the welding direction and is formed in such a way that a rear gas outlet of the rear gas injection part and a front gas outlet of the front gas injection part are located in the opposite direction to the welding direction.

The gas injected by the copper shoe device has pressure stronger than a precedence force of molten metal.

The traveling device part includes: an orthogonal weaving axis part for conveying the welding torch in the vertical direction of the bevel; and a traveling axis part for moving the welding torch along the bevel.

The welding torch includes: a welding tip having the outer diameter of less than 8mm; and an insulating coating layer formed on the outer circumferential surface of the welding tip.

The traveling device part includes: a current detection sensor for detecting welding current; and a voltage detection sensor for detecting welding voltage.

The control unit controls traveling speed of the traveling device part to maintain uniform deposition amount per unit volume using a current value and a voltage value of a voltage detection sensor.

In another aspect of the present invention, there is a horizontal butt joint deposited welding method using a horizontal butt joint deposited welding apparatus, which includes: a traveling device part for conveying a welding tip vertically or slantingly to bevels of an upper parent metal and a lower parent metal; a welding torch which has a welding tip and is mounted in the traveling device part; a copper shoe device which is mounted in the traveling device part and is located in the welding direction by the welding tip in order to inject a gas to molten metal in the reverse direction to the welding direction; and a control unit which controls the traveling device part to be conveyed along a particular weaving pattern including weaving traveling having a plurality of nodal points and diagonal traveling, the horizontal butt joint deposited welding method including: a welding current and voltage calculating step for calculating welding current and welding voltage in a movement section between the nodal points by the control unit; a stopping time calculating step for calculating stopping time at each of the nodal points by the control unit; and a deposited welding step of carrying out deposited welding to the bevel without carrying out root pass welding by controlling a welding machine and the traveling device part according to the welding current and the welding voltage of each movement section between the nodal points calculated in the welding current and voltage calculating step and the stopping time at each nodal point calculated in the stopping time calculating step.

The welding current and the welding voltage calculated in the welding current and voltage calculating step (S10) respectively have initial values according to the width of a gap (G) between the upper parent metal and the lower parent metal, and is varied in size at the two nodal points, which form a rear bead (B), to increase in proportion to the vertical width of the cross section of the bevel at the nodal point which forms a surface bead (F).

In case that the stopping time calculating step (S20) for preheating at the two nodal points between the upper parent metal and the lower parent metal to form the rear bead (B) and producing an indefective bead is T1, the stopping time at each of the two nodal points for forming the rear bead (B) which carries out welding of the inside of the bevel and the stopping time of the nodal point for forming the surface bead (F) are 0.2*T1 within an error range of about ±10%, and the stopping time at the nodal point for forming the surface bead (F) is 0.8*T1 within an error range of about ±10%.

The horizontal butt joint deposited welding method further includes a wire supply speed setting step (S30) of calculating wire supply speed to supply a wire of a proper amount for welding during movement between the nodal points. The wire supply speed calculated in the wire supply speed setting step (S30) is calculated to set an initial value at the nodal point for forming the rear bead (B) between the upper parent metal and the lower parent metal by the gap (G) between the upper parent metal and the lower parent metal, and is calculated to increase more than the initial value at the nodal points located between the nodal points for forming the rear bead (B) and the surface bead (F) in proportion to the vertical width of the cross section of the bevel.

### [Advantageous Effects]

As described above, while carrying out weaving and diagonal traveling welding, the present invention controls weaving and diagonal traveling of the welding tip to have a plurality of the nodal points which stop weaving or diagonal traveling so that voltage intensity, current intensity and wire supply speed are varied in proportion to the width of the cross section of the bevel and the stopping time is varied in inverse proportion to the width of the cross section of the bevel to carry out deposited welding of one pass including welding of the root part. Therefore, the present invention can complete horizontal butt joint welding through deposited welding of one or two passes regardless of the thickness of the parent metal because about 50%, preferably, about 80%, of the cross section area inside the bevel is formed into a single pass welded part including the root part, thereby remarkably reducing the number of the passes and considerably enhancing speed of welding work.

Moreover, the present invention carries out deposited welding on the inside and the surface of the welded cross section without defect by controlling current, voltage, wire supply speed and stopping time in proportion to the width of the cross section of the bevel during weaving welding and diagonal traveling welding, thereby remarkably enhancing welding quality.

Furthermore, the apparatus and method for deposited welding the horizontal butt joint according to the present invention can prevent bead deflection in the direction of the surface of the groove and precedence of molten metal in the tangential direction during deposited weaving welding for the horizontal butt joint by injecting a gas to the molten metal in the reverse direction to the welding direction by the copper shoe device.

### [Description of Drawings]

FIG. 1 is a view showing a welded state after root pass at the time of a conventional automatic welding.
FIG. 2 is a view showing a conventional welding tip 30.
FIG. 3 is a sectional view of welded parts showing that a plurality of welding passes are required like a macro cross section 53 in case that six parent metals having different thicknesses are welded by a conventional welding apparatus.
FIG. 4 is an exploded perspective view of a horizontal butt joint deposited welding apparatus 100 according to a preferred embodiment of the present invention.
FIG. 5 is a plan view of the welding apparatus 100 of FIG. 4.
FIG. 6 is a right side view of the welding apparatus 100 of FIG. 4 (based on FIG. 4).
FIG. 7 is a perspective view of a copper shoe device 4 of FIG. 5.
FIG. 8 is a sectional view of a welding torch 8 of FIG. 5.
FIG. 9 is a block diagram showing a rough function of the welding apparatus 100 of FIG. 5.
FIG. 10 is a flow chart showing a process of a horizontal butt joint deposited welding method according to a preferred embodiment of the present invention.
FIG. 11 is a view showing a moving control state of a traveling axis part 40 and an orthogonal weaving axis part 41 by a control unit 60 of FIG. 9 for a particular weaving pattern 7.
FIG. 12 is a graph showing welding conditions including control of a stopping time at nodal points P1 to P5, a moving speed between the nodal points, and welding current and voltage in welding the particular weaving pattern 7.
FIG. 13 is a view showing a welding process using the particular weaving pattern 7.
FIG. 14 is a view showing a welded state in a process of carrying out a weaving motion by the orthogonal weaving axis part 41.
FIG. 15 is a view showing a welding motion in a traveling direction and a wire 12.
FIG. 16 is a view showing a state where molten metal is pushed up to an upper parent metal 1a by the copper shoe device.
FIGS. 17 and 18 are sectional views of a welded part showing a state where deposited welding is achieved by the welding apparatus 100 having the configuration of FIGS. 5 to 11.

### [Mode for Invention]

Hereinafter, reference will be now made in detail to the preferred embodiments of the present invention with reference to the attached drawings.

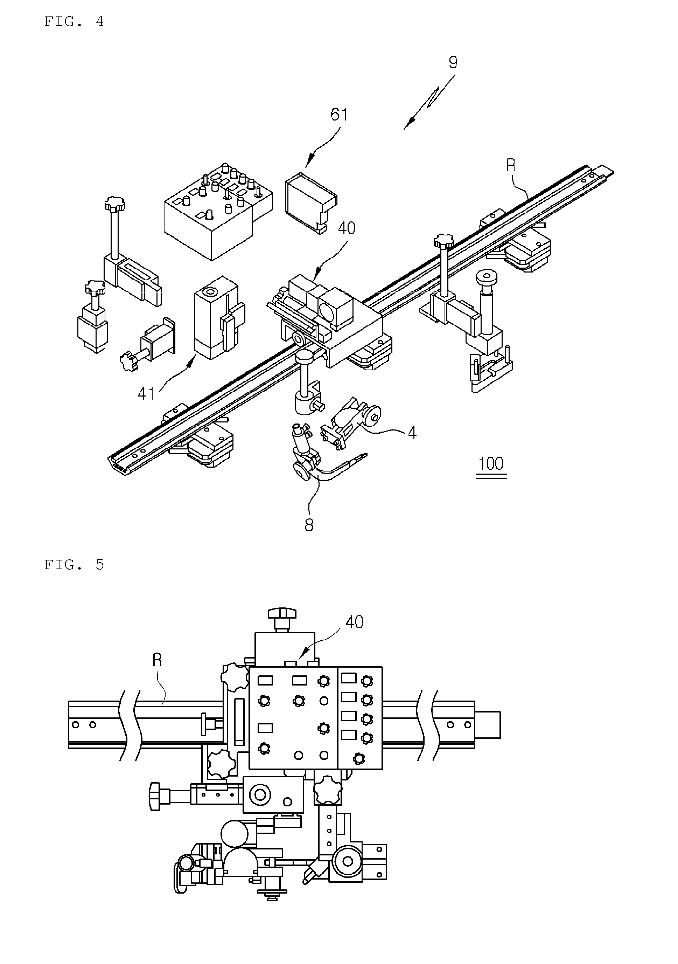

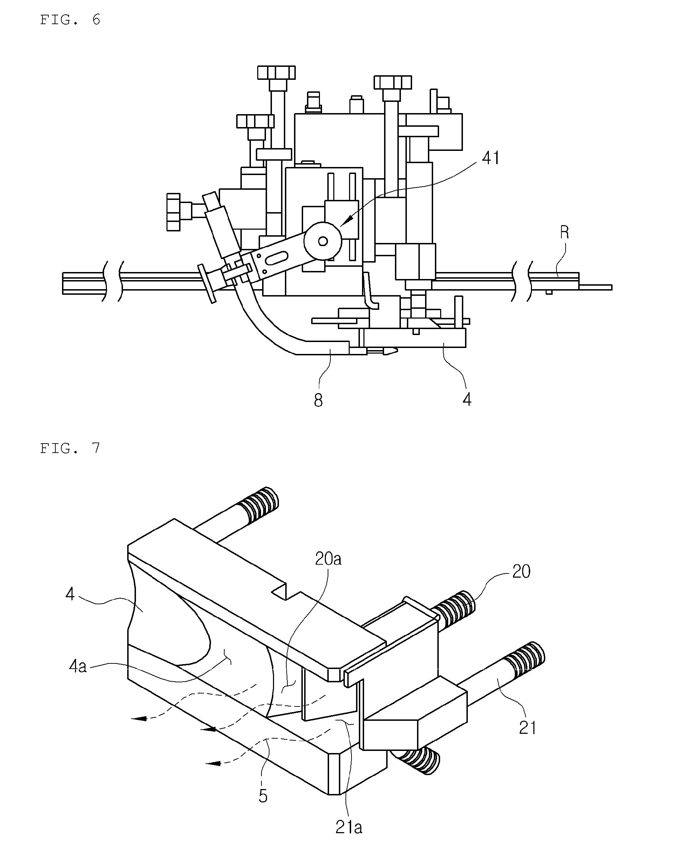

FIG. 4 is an exploded perspective view of a horizontal butt joint deposited welding apparatus 100 according to a preferred embodiment of the present invention, FIG. 5 is a right side view of the welding apparatus 100 of FIG. 4, and FIG. 6 is a bottom view of the welding apparatus 100 of FIG. 4.

As shown in FIG. 4, the welding apparatus 100 includes: a traveling device part 9 which travels on a guide rail R; a welding torch 8 mounted on the bottom surface of the traveling device part 9; a copper shoe device 4 mounted in the welding direction of the welding torch 8 in order to inject a gas, which has pressure stronger than a precedence force of molten metal, to the molten metal in the reverse direction to the welding direction; a control unit 60; a display part 63; a setting part 64; and a welding machine 68.

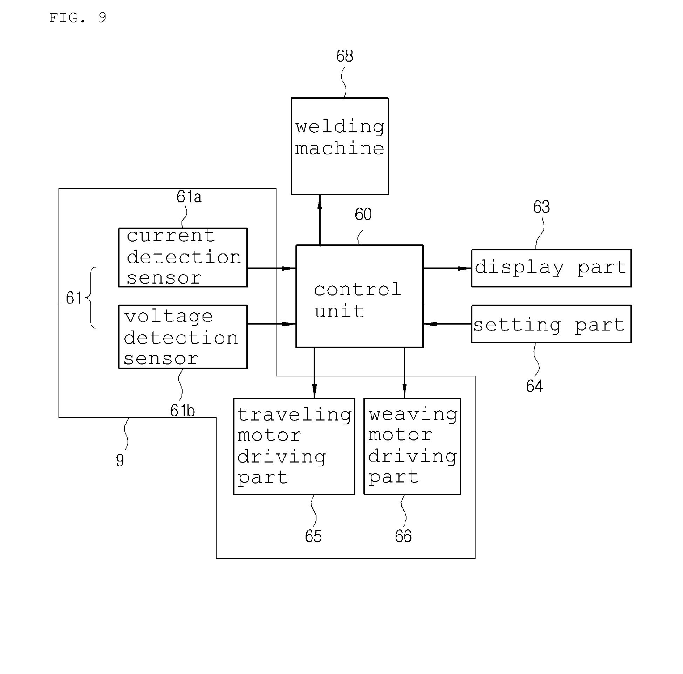

The configuration of the welding apparatus 100 of FIG. 4 will be described in description of the block diagram of the welding apparatus 100 of FIG. 9 in detail.

FIG. 7 is a perspective view of the copper shoe device 4 of FIG. 5.

As shown in FIG. 7, the copper shoe device 4 includes: a rear gas injection part 20 and a front gas injection part 21 which are formed at the right side; and a gas passage 4a, a rear gas outlet 20a and a front gas outlet 21a, the gas passage 4a having a groove form which gets shallower toward the welding direction.

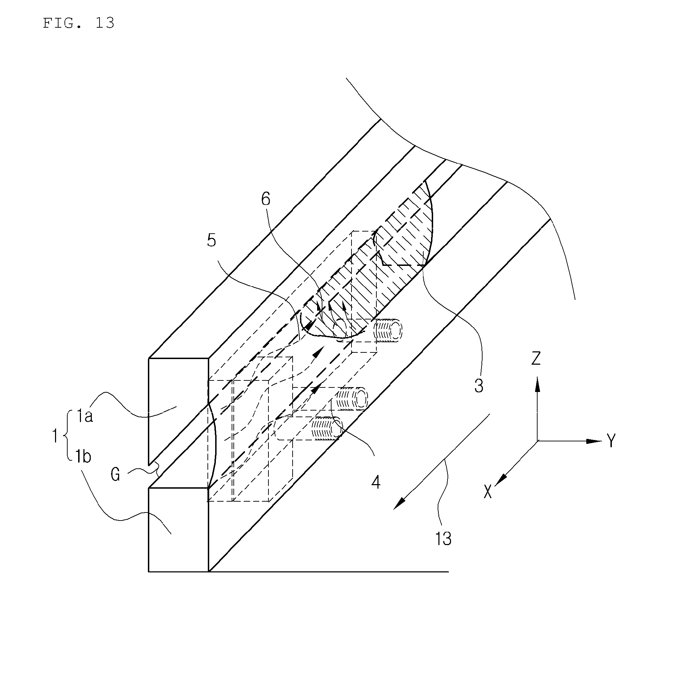

The copper shoe device 4 having the above configuration is located in the opposite direction to the welding torch 8 of the welding direction 13 as shown in FIG. 13 and is mounted on the welding apparatus 100 to spray a gas 5 in the opposite direction to the welding torch 8, and then, gets in contact with a contact portion where an upper parent metal 1a and a lower parent metal 1b meet together.

After injecting the gas through the rear gas injection part 20 and the front gas injection part 21, the copper shoe device 4 sprays the gas 5 having pressure stronger than a preceding force of a molten metal 3 (see FIG. 13) in the opposite direction to the welding torch 8 through the rear gas outlet 20a and the front gas outlet 21a located adjacent to a welding tip 32 of the gas passage 4a viewed in the left side of the drawing, so as to prevent a flow of the molten metal 3 (see FIG. 13) into the welding direction and supply an upward resistance 6 (see FIG. 13) to the molten metal 3 (see FIG. 13). Therefore, it prevents that the molten metal flows to an arc formation position and provides the force to push upward, and solves problems of the prior arts which carry out welding of a number of passes due to formation of a macro cross section 53 because bevels of the upper parent metal 1a and the lower parent metal 1b are not molten due to unreaching of an arc by the molten metal.

The gas pressure stronger than the preceding force of the molten metal 3 of the gas 5 sprayed by the copper shoe device 4 means pressure enough to prevent that the molten metal flows into the welding direction. The preceding force of the molten metal is arithmetically determined by an amount of the molten metal produced by welding current and welding voltage. Therefore, pressure of the gas sprayed by the copper shoe device 4 is determined by the preceding force arithmetically determined by the amount of the molten metal, and because the pressure value is varied according to welding situations, limitation of a concrete numerical value will be omitted.

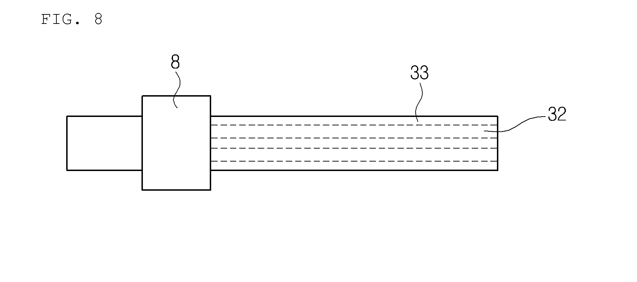

FIG. 8 is a sectional view of a welding torch 8 of FIG. 5.

As shown in FIG. 8, the welding torch 8 has the outer diameter of less than 8mm, preferably, less than 5mm. The welding torch 8 includes a welding tip 32 and an insulating coating layer 33 made of ceramic formed on the outer circumferential surface of the welding torch 8. The welding torch 8 is small in outer diameter and has the insulating coating layer 33 formed on the surface thereof so as to smoothly weave inside the bevel due to the small welding tip, and can provide a continuous welding because the insulating coating layer 33 prevents electric short even though the welding tip 32 comes into contact with the bevel.

FIG. 9 is a block diagram showing a rough function of the welding apparatus 100 of FIG. 5.

Referring to FIGS. 4 and 9, the welding apparatus 100 will be described in more detail. As shown in FIG. 4, the welding apparatus 100 includes: a traveling device part 9 which travels on a guide rail R; a welding torch 8 mounted on the bottom surface of the traveling device part 9; a copper shoe device 4 mounted in the welding direction of the welding torch 8 in order to inject a gas, which has pressure stronger than a precedence force of molten metal, to the molten metal in the reverse direction to the welding direction; a control unit 60 for controlling voltage, current, wire supply speed, traveling speed, stopping time, gas injection pressure of the copper shoe device 4, and conveying speed of an orthogonal weaving axis part 41 and a traveling axis part 40 of the traveling device part 9 by each position of the bevel of the horizontal butt joint in order to maintain a fixed deposition amount to prevent the macro cross section 53 (see FIG. 1), on which a welded side is not formed, from being formed on the upper parent metal 1a; a display part 63 for displaying a welded state; a setting part 64 for setting welding parameters; and a welding machine 68 for supplying welding voltage and current to the welding torch 8.

As shown in FIG. 4, the traveling device part 9 includes: a traveling axis part 40 for moving the welding apparatus 100 along a guide rail R; an orthogonal weaving axis part 41 for carrying out a weaving motion to convey the welding torch 8 in the perpendicular direction of the welding bevel that is perpendicular to the guide rail R; and a sensor part 61 for detecting welding current and voltage.

Moreover, as shown in FIG. 9, the traveling axis part 40 has a traveling motor driving part 65, and the orthogonal weaving axis part 41 has a weaving motor driving part 66. Furthermore, the sensor part 61 includes a welding current detection sensor 61a for detecting welding current and a welding voltage detection sensor 61b for detecting welding voltage.

The welding apparatus 100 carries out deposited welding having a particular weaving pattern 7 by the control unit 60 which controls voltage and current of an arc produced from the welding torch 8, movement and stopping time of the traveling axis part, and wire supply speed by each position of the bevel so as to directly carry out deposited welding at the first pass inside the bevel without carrying out root pass welding which forms the root part 2 to the gaps formed between the two parent metals 1a and 1b, thereby carrying out the first pass welding of about 50%, preferably, more than 80%.

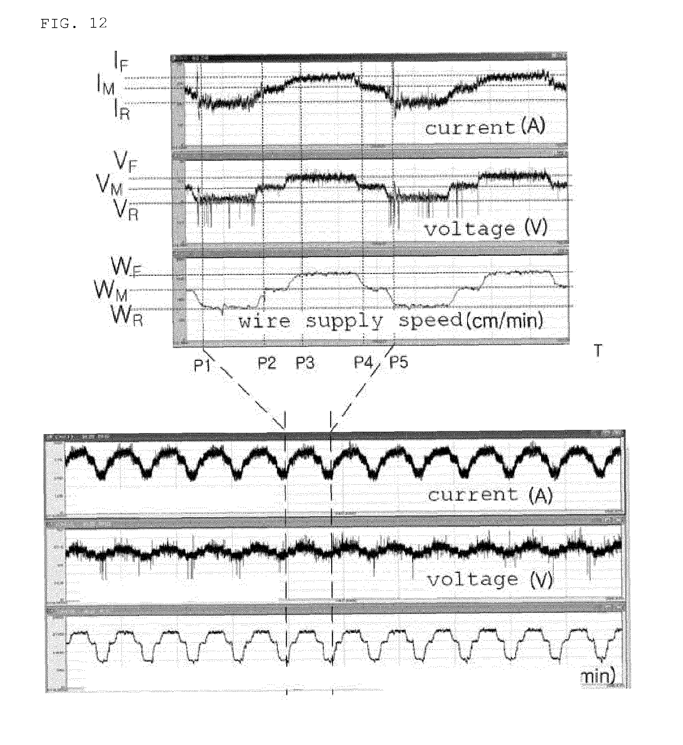

The control unit 60 which makes deposited welding possible during the first pass welding detects changes in welding output current and voltage, which are generated by a difference in wire resistances through changes in wire projection length 12 (see FIG. 12) corresponding to various changes of gaps, by the welding current detection sensor 61a and the welding voltage detection sensor 61b. Moreover, the control unit 60 controls the traveling motor driving part 65 and the weaving motor driving part 66 to change the actual traveling speed 13 of the welding apparatus 100 in order to maintain a fixed deposition amount per unit volume. Here, a change in the actual traveling speed through an arc sensing can be selected by the setting part 64. In case that welding is carried out in fixed welding conditions, such as current, voltage and welding speed, when the gap increases, namely, when bevel unit volume increases, the deposition amount is reduced per unit volume and the wire projection length 12 (see FIG. 12) is increased, so that the output current and voltage values sent to the welding current detection sensor 61a and the welding current detection sensor 61b are reduced by -△ A and -△ V. The control part 60 controls the traveling motor driving part 65 and the weaving motor driving part 66 to reduce traveling speed of the traveling device part 9, so that the deposition amount per unit volume is increased. Accordingly, the wire projection length 12 is reduced again, and hence, the output current and voltage values sent to the welding current detection sensor 61a and the welding current detection sensor 61b are increased by +△ A and +△ V. Therefore, the fixed deposition amount per unit volume can be maintained.

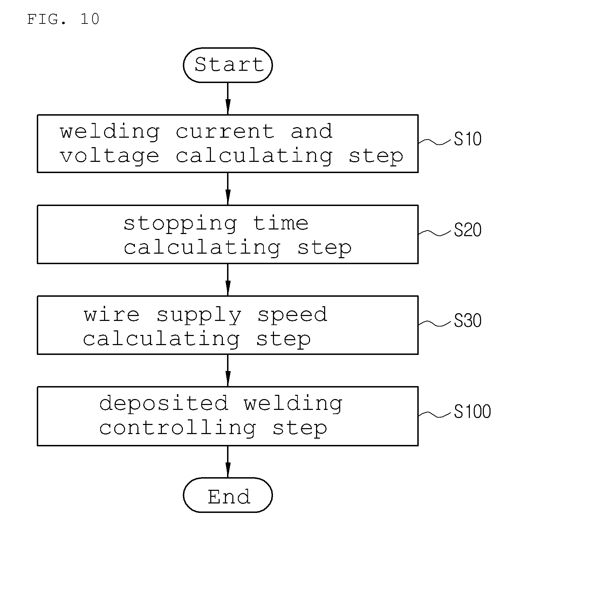

FIG. 10 is a flow chart showing a process of a horizontal butt joint deposited welding method according to a preferred embodiment of the present invention.

As shown in FIG. 10, the horizontal butt joint deposited welding method according to the present invention carries out horizontal butt joint welding without carrying out root pass welding to the upper parent metal 1a which has the bevel on the bottom surface and the lower parent metal 1b which has no bevel using the horizontal butt joint deposited welding apparatus 100 which includes the traveling device part 9 having the orthogonal weaving axis part 41 and the traveling axis part 40, the copper shoe device 4, the welding torch 8 and the control unit 60. The horizontal butt joint deposited welding method includes: a welding current and voltage calculating step (S10) of forming a plurality of nodal points which divide a course to carry out weaving welding and diagonal welding on the basis of a gap G between the two parent metals determined by the thickness of the two parent metals, calculating initial values of welding voltage and welding current at two nodal points, namely, a first nodal point P1 and a fifth nodal point P5 which carry out welding at a forming position of a rear bead B, out of a number of nodal points, namely, first to fifth nodal points P1 to P5, for particular weaving pattern welding which carries out stop welding with stopping time at each nodal point and values of welding voltage and welding current calculated in relation with the initial values at the nodal point, namely, the third nodal point P3, of the forming position of a surface bead F and at a plurality of the divided nodal points, namely, the second nodal point P2 and the fourth nodal point P4, between the first nodal point P1 and the fifth nodal point P5 of the forming position of the rear bead B and the third nodal point of the forming position of the surface bead F, and transferring the calculated values to the welding machine 68; a stopping time calculating step (S20) of calculating stopping time at the first nodal point P1 to the fifth nodal point P5 based on the gap G between the two parent metals 1a and 1b by the control unit 60; and a deposited welding step (S100) of carrying out deposited welding by the particular weaving pattern by the stopping time at each nodal point and the welding current and welding voltage calculated between the nodal points.

The welding current and the welding voltage calculated through the welding current and voltage calculating step (S10) are varied to set initial values according to the width of the gap G and to increase proportionally to the vertical width of the cross section of the bevel of the third nodal point P3 which forms the surface bead F at the first nodal point P1 and the fifth nodal point P5 forming the rear bead B.

Additionally, in relation with the stopping time at each nodal point calculated during the stopping time calculating step (S20), in case that the stopping time for preheating at the first nodal point P1 and the fifth nodal point P5 for forming the rear bead B and producing an indefective bead is T1, stopping times T2 and T4 at the nodal points between the two nodal points P1 and P5 for forming the rear bead B which carries out welding of the inside of the bevel and the nodal point for forming the surface bead F are 0.2*T1 within an error range of about ±10%, and the stopping time at the nodal point for forming the surface bead F is 0.8*T1 within an error range of about ±10%.

Moreover, the horizontal butt joint deposited welding method according to the present invention further includes a wire supply speed setting step (S30) of calculating wire supply speed for supplying a wire of a proper amount to carry out welding during movement between the nodal points.

The initial value at the nodal points for setting the rear bead B is set by the gap G, and the wire supply speed calculated in the wire supply speed calculating step (S30) is calculated to increase more than the initial value in proportion to the vertical width of the cross section of the bevel at the nodal points located between the nodal points for forming the rear bead B and the nodal point for forming the surface bead F.

The deposited welding step (S100) directly carries out deposited welding of the first pass inside the bevel of the welding progress side without carrying root pass welding to remove a step difference between the upper parent metal and the lower parent metal on the opposite side of the welding progress side.

In other words, in the deposited welding step (S100), welding is controlled to have different stopping times, voltages, currents and wire supply speeds at the nodal points, and movement speed between the nodal points is controlled to have a value varied according to the width of the gap G.

Satisfaction of welding conditions at each nodal point or welded part is determined by the welding current and welding voltage detected by the welding current detection sensor 61a and the welding voltage detection sensor 61b of FIG. 9.

Furthermore, the stopping time at each nodal point and movement between the nodal points are carried out by the traveling motor driving part 65 and the weaving motor driving part 66 of FIG. 9.

Additionally, the welding current, the welding voltage and the wire supply speed are controlled by the control unit 60 which controls the welding machine 68.

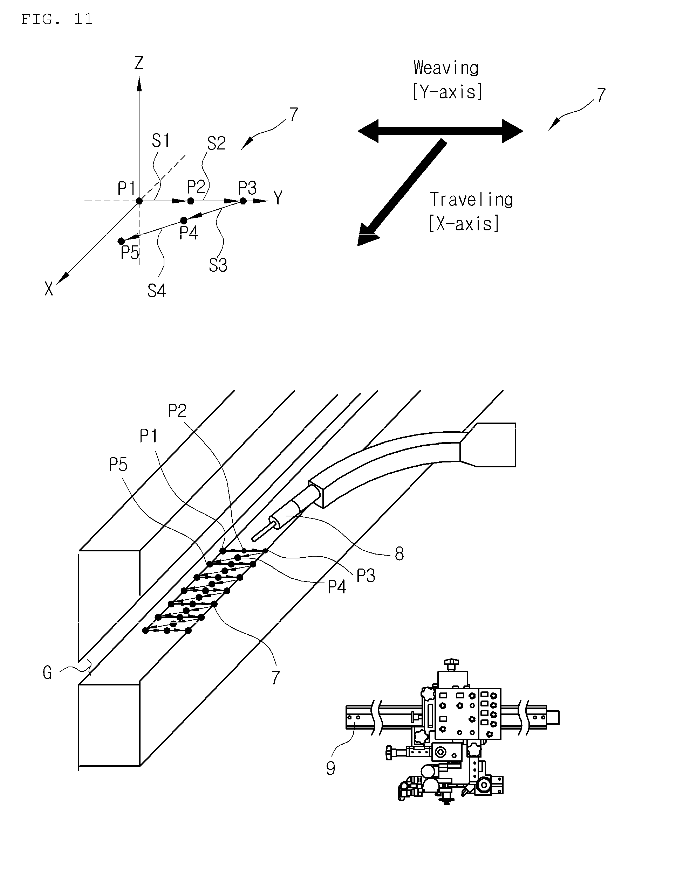

FIG. 11 is a view showing a moving control state of the traveling axis part 40 and the orthogonal weaving axis part 41 by the control unit 60 of FIG. 9 for a particular weaving pattern 7, and FIG. 12 is a graph showing welding conditions including control of the stopping time at the nodal points P1 to P5, moving speed between the nodal points, and welding current and voltage in welding the particular weaving pattern 7.

As shown in FIG. 11, the particular weaving pattern 7 is made through combination of the orthogonal weaving axis part 41 and the traveling axis part 40 which are located inside the welding apparatus 100.

The particular weaving pattern 7 carries out weaving traveling in a section of the first nodal point P1 which is the first root part → the second nodal point P2 which is the first middle part → the third nodal point P3 which is the surface part so that only the orthogonal weaving axis part 41 moves in the Y-axis direction and carries out diagonal traveling in a section of the third nodal point P3 which is the surface part → the fourth nodal point P4 which is the second middle part → the fifth nodal point P5 which is the second root part so that the orthogonal weaving axis part 41 and the traveling axis part 40 operate at the same time to weave in the diagonal direction.

Moreover, the stopping time T to stop at each nodal point to produce a fixed deposition amount and conveying speed S between the nodal points have a predetermined speed value proportional to the width of the gap G determined by the thickness of the parent metal, and the welding current and the welding voltage have the minimum values at the first nodal point P1 and the fifth nodal point P5 which form the rear bead B and the maximum values at the third nodal point P3 which forms the surface bead F. Furthermore, the nodal points located between the first nodal point P1 and the fifth nodal point P5 for forming the rear bead B and the third nodal point P3 for forming the surface bead F have sizes proportional to the width of the cross section of the bevel.

In order to carry out the horizontal butt joint deposited welding by the particular weaving pattern 7, as shown in FIG. 11, when an inclined plane is formed on the bottom surface of the upper parent metal 1a, the bevel as the welded part between the lower parent metal 1b and the upper parent metal 1a is formed.

Referring to FIG. 12, an example of control of welding conditions for carrying out horizontal butt joint welding by each nodal point to the two iron parent metals with a thickness of 23mm using the particular weaving pattern 7 having the five nodal points P1 to P5 will be described as follows.

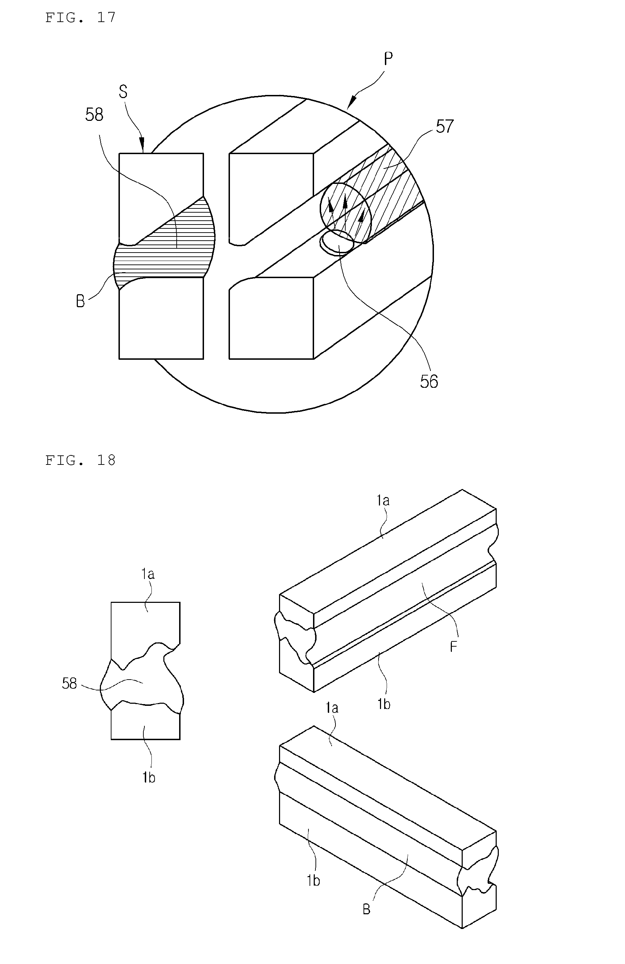

In FIG. 12, at the first nodal point P1 and the fifth nodal point P5 for forming the rear bead B (see FIGS. 17 and 18), there is stopping time of one second for preheating. Furthermore, at the second nodal point P2 and the fourth nodal point P4 for carrying out welding inside the bevel, there is stopping time of 0.2 seconds, and at the third nodal point P3 for forming the surface bead F, there is stopping time of about 0.8 seconds for preheating and forming molten metal of high capacity.

Additionally, the welding current IR and the welding voltage VR of the first nodal point P1 and the fifth nodal point P5 are controlled to have 263A and 31.2V within an error range of about ±10%, the welding current IM and the welding voltage VM of the second nodal point P2 and the fourth nodal point P4 are controlled to have 359A and 33.2V within an error range of about ±10%, and the welding current IF and the welding voltage VF at the third nodal point P3 is controlled to have 421A and 35.7V within an error range of about ±10%.

In addition, the moving speed between the nodal points P1 to P5 is maintained uniformly at 2 cm/sec, and is increased to have a predetermined speed value in proportion to the width of the gap G or the bevel.

Moreover, the wire supply speed WR between the first nodal point P1 and the second nodal point P2 is 1028cm/min within an error range of about ±10%, the wire supply speed WM between the second nodal point P2 and the third nodal point P3 is 1727cm/min within an error range of about ±10%, the wire supply speed WF between the third nodal point P3 and the fourth nodal point P4 is 2139cm/min within an error range of about ±10%, and the wire supply speed WM between the fourth nodal point P4 and the fifth nodal point P5 is 1727cm/min within an error range of about ±10%.

Furthermore, carriage traveling speed is average about 10.6cm/min from the first nodal point P1 to fifth nodal point P5.

FIGS. 13 to 18 are views showing the deposited welding step (S100) by the welding apparatus 100 of FIG. 4.

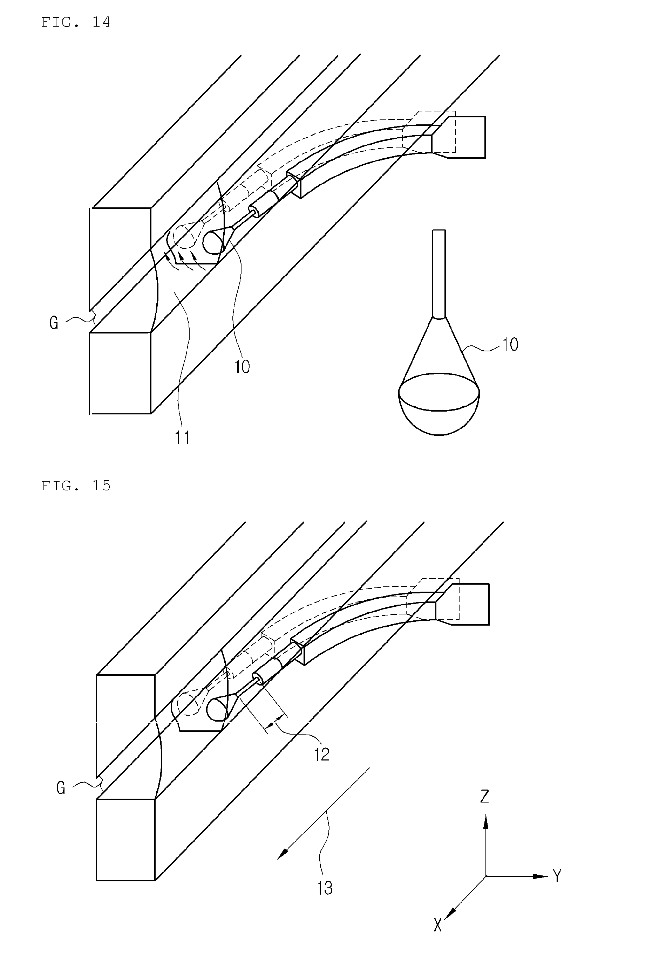

FIG. 13 is a schematic view showing a state where the copper shoe device 4 gets in contact with the bevel, FIG. 14 is a view showing a welding state while weaving is carried out by the orthogonal weaving axis part 41, and FIG. 15 is a view showing welding and a wire 12 in the diagonal direction.

As shown in FIGS. 13 to 15, after the upper parent metal 1a and the lower parent metal 1b are arranged to form the gap G which has a width according to the thickness of the parent metals 1a and 1b, the welding current, the welding voltage, the wire supply speed and the traveling device part moving speed of the particular weaving pattern 7 at each welded part are calculated when the welding current and voltage calculating step (S10), the stopping time calculating step (S20) and the wire supply speed calculating step (S30) of FIG. 10 are carried out based on the formed gap G, and then, the deposited welding step (S100) is carried out.

In the deposited welding step (S100), because the stopping time is the longest at the first nodal point P1 and the fifth nodal point P5 for forming the rear bead B (See FIG. 17), when the molten metal of high capacity is formed, the rear bead B of indefective quality can be formed without carrying out root pass welding.

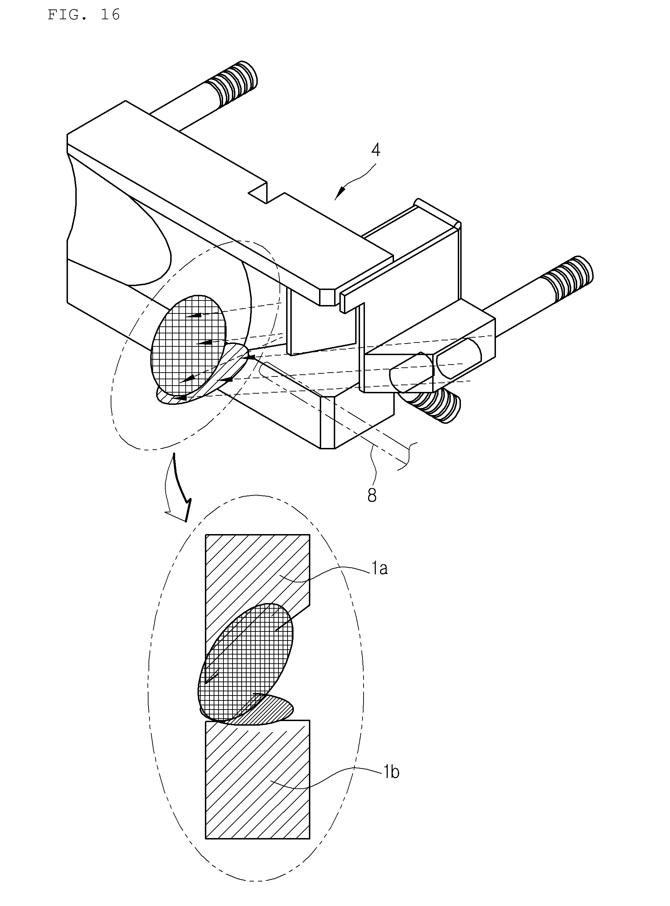

In the above step, as shown in FIG. 6, the copper shoe device 4 is mounted in such a way that the rear gas outlet 20a and the front gas outlet 21a are located at positions adjacent to the welding tip 32 and the gas passage 4a is located at the rear side of the welding direction. The copper shoe device 4 sprays a gas 5 with gas pressure stronger than the precedence force of the molten metal in the opposite direction to the welding direction while welding is carried out. Accordingly, a upward deflecting force 6 acts to the molten metal 3 so as to prevent a flow of the molten metal 3 to an area where an arc is generated and to push the molten metal toward the upper parent metal 1a. FIG. 16 is a view showing a state where the molten metal is pushed up to the upper parent metal 1a by the gas sprayed by the copper shoe device 4 and the great arc force but does not move toward the welding torch 8.

FIGS. 17 and 18 are sectional views of the welded part showing a state where deposited welding is achieved by the welding apparatus 100 having the configuration of FIGS. 5 to 11 and the welding method. In FIG. 17, S is a sectional view and P is a sectional perspective view.

When horizontal butt joint welding is carried out by applying the welding method of FIG. 10 to the horizontal butt joint deposited welding apparatus 100 of FIG. 4, a large molten metal 56 is formed through the stopping time at each of the first nodal point P1 to the fifth nodal point P5. In this instance, the supplied welding current and voltage are calculated by the welding current and voltage calculating step of FIG. 10 according to the thickness of the upper parent metal 1a and the lower parent metal 1b. In the welding current and voltage calculating step (S10), when the welding current and the welding voltage are calculated, the moving speed of each nodal point is also calculated.

Because the performance of the particular weaving pattern 7 minimizes the diameter of the welding tip 32 of the welding torch 8 and forms the insulating coating layer 33 on the outer circumferential surface, it makes the welding tip weave freely and prevents stop of arc generation by insulation even though the upper parent metal 1a or the lower parent metal 1b and the welding tip 32 get in contact with each other. That is, the particular weaving pattern 7 is difficult to carry out weaving of the welding tip 32 in case that the welding torch 8 of the present invention is not applied, and cannot be easily operated because of stop of arc generation in case that the welding tip 32 which is not insulated comes into contact with the upper parent metal 1a and the lower parent metal 1b.

Next, while the above welding step is carried out, the copper shoe device 4 injects the gas 5 to the molten metal 56 by control of the control unit 60. The copper shoe device 4 injects the gas of the predetermined pressure in the opposite direction to the welding direction in consideration of the amount of the molten metal produced by the control unit 60 using information of welding current and welding voltage and traveling control information of the orthogonal weaving axis part 41 and the traveling axis part 40. The gas injected during the gas injection process prevents that the molten metal formed by the large arc force flows toward the welding torch 8 by the gas pressure stronger than the precedence force of the molten metal.

The large molten metal 56 formed during the welding process is pushed up to the bevel of the upper parent metal 1a by the gas pressure and the arc force so as to form a macro cross section 58 on which the upper parent metal is welded.

After the molten metal 56 is formed by the arc force, the movement direction, speed and stopping time of the orthogonal weaving axis part 41 and the traveling axis part 40 are controlled according to the stopping time and the moving speed between the nodal points which are calculated by the stopping time calculating step (S20) of FIG. 10. When arc is generated according to the welding current and the welding voltage at each welding position, welding by the particular weaving pattern 7 illustrated in FIG. 11 is carried out between the upper parent metal 1a and the lower parent metal 1b.

As described above, in case that horizontal butt joint welding is carried out to the two parent metals through the horizontal butt joint deposited welding method which carries out the welding condition control of the particular weaving pattern 7, the welding current, the welding voltage, the stopping time, the wire supply speed and the traveling speed are calculated by welding of the first pass to weld 50% to 100% of the welded part. Therefore, when the initial deposited welding which is the first pass welding inside the bevel is carried out without performing root pass welding, as shown in FIGS. 17 and 18, the present invention can perform deposited welding of 50% to 100% having the rear bead B and the surface bead F with good quality by a single welding. Therefore, the present invention can perform horizontal butt joint welding through one or two passes because it just carries out welding of the remaining part, namely, 50% to 0% of the welded part, thereby remarkably reducing the number of passes for horizontal butt joint welding.

## Claims

1. A horizontal butt joint welding apparatus comprising:
a traveling device part for conveying a welding tip vertically or slantingly to bevels of an upper parent metal and a lower parent metal;
a welding torch which has a welding tip and is mounted in the traveling device part;
a copper shoe device which is mounted in the traveling device part and is located in the welding direction by the welding tip in order to inject a gas to molten metal in the reverse direction to the welding direction; and
a control unit for controlling welding conditions according to positions of the bevels in order to maintain a fixed deposition amount on the upper parent metal not to form a macro cross section on which a welded side is not formed,
wherein the control unit enables the traveling device part to be conveyed along a particular weaving pattern including weaving traveling having a plurality of nodal points and diagonal traveling and controls welding current and voltage, wire supply speed, traveling speed, and stopping time at the nodal points in moving intervals between the nodal points to carry out deposited welding of the bevels.

2. The horizontal butt joint welding apparatus according to claim 1, wherein the welding current and voltage respectively have initial values according to the length of a gap (G) between the upper parent metal and the lower parent metal, and is varied in size at the two nodal points, which form a rear bead (B), to increase in proportion to the vertical width of the cross section of the bevel at the nodal point which forms a surface bead (F).

3. The horizontal butt joint deposited welding apparatus according to claim 1, wherein in case that the stopping time for preheating at the two nodal points to form the rear bead (B) and producing an indefective bead is T1, the stopping time at each of the two nodal points for forming the rear bead (B) which carries out welding of the inside of the bevel and the stopping time of the nodal point for forming the surface bead (F) are 0.2*T1 within an error range of about ±10%, and
wherein the stopping time at the nodal point for forming the surface bead (F) is 0.8*T1 within an error range of about ±10%.

4. The horizontal butt joint deposited welding apparatus according to claim 1, wherein the wire supply speed is calculated to set an initial value at the nodal points for forming the rear bead (B) by the gap (G) and is calculated to increase more than the initial value at the nodal points located between the nodal points for forming the rear bead (B) and the surface bead (F) in proportion to the vertical width of the cross section of the bevel.

5. The horizontal butt joint deposited welding apparatus according to claim 1, wherein the control unit controls traveling speed of the traveling device part to maintain uniform deposition amount per unit volume using a current value and a voltage value of a voltage detection sensor.

6. A horizontal butt joint deposited welding method using a horizontal butt joint deposited welding apparatus, which includes: a traveling device part for conveying a welding tip vertically or slantingly to bevels of an upper parent metal and a lower parent metal; a welding torch which has a welding tip and is mounted in the traveling device part; a copper shoe device which is mounted in the traveling device part and is located in the welding direction by the welding tip in order to inject a gas to molten metal in the reverse direction to the welding direction; and a control unit which controls the traveling device part to be conveyed along a particular weaving pattern including weaving traveling having a plurality of nodal points and diagonal traveling, the horizontal butt joint deposited welding method comprising:
a welding current and voltage calculating step for calculating welding current and welding voltage in a movement section between the nodal points by the control unit;
a stopping time calculating step for calculating stopping time at each of the nodal points by the control unit; and
a deposited welding step of carrying out deposited welding to the bevel without carrying out root pass welding by controlling a welding machine and the traveling device part according to the welding current and the welding voltage of each movement section between the nodal points calculated in the welding current and voltage calculating step and the stopping time at each nodal point calculated in the stopping time calculating step.

7. The horizontal butt joint deposited welding method according to claim 6, wherein the welding current and the welding voltage calculated in the welding current and voltage calculating step (S10) respectively have initial values according to the width of a gap (G) between the upper parent metal and the lower parent metal, and is varied in size at the two nodal points, which form a rear bead (B), to increase in proportion to the vertical width of the cross section of the bevel at the nodal point which forms a surface bead (F).

8. The horizontal butt joint deposited welding method according to claim 6, wherein in case that the stopping time calculating step (S20) for preheating at the two nodal points between the upper parent metal and the lower parent metal to form the rear bead (B) and producing an indefective bead is T1, the stopping time at each of the two nodal points for forming the rear bead (B) which carries out welding of the inside of the bevel and the stopping time of the nodal point for forming the surface bead (F) are 0.2*T1 within an error range of about ±10%, and
wherein the stopping time at the nodal point for forming the surface bead (F) is 0.8*T1 within an error range of about ±10%.

9. The horizontal butt joint deposited welding method according to claim 6, further comprising:
a wire supply speed setting step (S30) of calculating wire supply speed to supply a wire of a proper amount for welding during movement between the nodal points,
wherein the wire supply speed calculated in the wire supply speed setting step (S30) is calculated to set an initial value at the nodal point for forming the rear bead (B) between the upper parent metal and the lower parent metal by the gap (G) between the upper parent metal and the lower parent metal, and is calculated to increase more than the initial value at the nodal points located between the nodal points for forming the rear bead (B) and the surface bead (F) in proportion to the vertical width of the cross section of the bevel.
